# EUROPÄISCHE PATENTSCHRIFT

(11) **EP 1 407 622 B1**
(45) Veröffentlichungstag und Bekanntmachung des Hinweises auf die Patenterteilung: **12.10.2005**
(21) Anmeldenummer: 02754359.4
(22) Anmeldetag: 15.07.2002
(51) Int. Cl.: H04Q 3/00

(54) **KUNDENSPEZIFISCHE, DYNAMISCHE KONFIGURATION EINER OMC-NMC-SCHNITTSTELLE**
CUSTOMER-SPECIFIC, DYNAMIC CONFIGURATION OF AN OMC-NMC INTERFACE
CONFIGURATION DYNAMIQUE SPECIFIQUE-CLIENT D'INTERFACE OMC-NMC

(30) Priorität: 13.07.2001 DE 10134125
(43) Veröffentlichungstag der Anmeldung: 14.04.2004
(73) Patentinhaber: SIEMENS AKTIENGESELLSCHAFT, 80333 München (DE)
(72) Erfinder: HIRSCH, Lucian, 81373 München (DE)
(86) Internationale Anmeldenummer: PCT/DE2002/002585
(87) Internationale Veröffentlichungsnummer: WO 2003/007546

(56) Entgegenhaltungen:
- DE-A- 19 947 083
- DE-A- 19 953 877

## Beschreibung

Die Erfindung betrifft ein Verfahren zum kundenspezifischen Einrichten eines Telekommunikations-Management-Netzwerks gemäß dem Oberbegriff des Patentanspruchs 1.

Telekommunikations-Management-Netze TMN dienen der Verwaltung von Netzwerkelementen und umfassen mehrere Management-Ebenen, wobei jede Ebene eine Manager-Funktion für die nächst tiefere Ebene (wenn vorhanden) und eine Agent-Funktion für die nächst höhere Ebene (wenn vorhanden) erfüllt. Für diese Erfindung sind die ersten drei Management-Ebenen significant.

Ein Beispiel ist aus dem Dokument DE-19953877 bekannt.

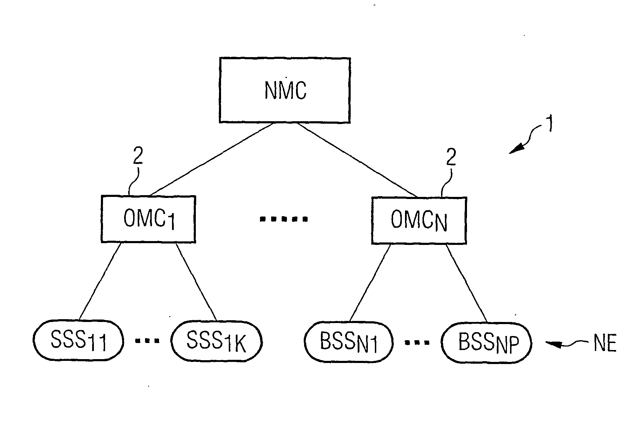

Wie in Figur 1 gezeigt ist, befindet sich auf der obersten Hierarchiestufe, der sog. Netzwerk-Management-Ebene, ein Netzwerkmanager NMC (NMC: Network Management Center), der nur herstellerunabhängige Aspekte des Netzmanagements unterstützt und eine netzweite Integration unterschiedlicher (herstellerspezifischer) Netzwerkelemente NE ermöglicht.

Die Bezeichnung "Netzmanagement" umfaßt dabei sämtliche Maßnahmen zur Steuerung, Wartung, Fehlererkennung, Konfiguration oder zum Test, etc. von Netzwerkelementen NE. In der Praxis wird insbesondere zwischen Fehlermanagement, Konfigurationsmanagement, Testmanagement und Performancemanagement unterschieden.

In der untersten Hierarchieebene des TMN 1 befinden sich die zu verwaltenden Netzwerkelemente (NE), wie beispielsweise Funknetz-Steuereinrichtungen SSS₁₁-SSS_{1K} (Switching-SubSystem) (z.B. Mobile Switching Centre MSC) oder Basisstationen BSS_{N1}-BSS_{NP} (Base-Station-System) (z.B. Base-Station-Controler BSC; Base-Transceiver-Station BTS).

In der mittleren Ebene des TMN 1, der sog. Netzwerkelement-Mangement-Ebene, befinden sich mehrere Elementmanager OMC (Operation and Maintenance Center), die sowohl funktionale als auch herstellerspezifische Eigenschaften der Netzwerkelemente NE verwalten können.

Für die Kommunikation zwischen den (herstellerspezifischen) Elementmanagern OMC und dem übergeordneten, herstellerunabhängigen Netzwerkmanager NMC ist eine üblicherweise objektorientierte Schnittstelle implementiert. Dabei sind die Netzressourcen als Instanzen verschiedener Objektklassen definiert. Unter dem Begriff "Netzressourcen" werden insbesondere sämtliche Hardwareeinrichtungen (Platinen, Schaltkreise, etc.) sowie Softwareprogramme (z.B. die BSC/BTS-Funktionen) verstanden.

Die Gesamtheit aller für diese Management-Schnittstelle definierten Objektklassen und deren gegenseitige Beziehungen (Herkunft, Verknüpfung etc.) bilden das sogenannte Objektmodell bzw. Informationsmodell der OMC-NMC-Schnittstelle.

Der Elementmanager OMC enthält als einen Bestandteil der OMC-NMC-Schnittstelle eine Softwarekomponente, den sogenannten NMC-Agent. Der tatsächliche Funktionsumfang dieser Schnittstelle kann von Kunde zu Kunde (Betreiber) unterschiedlich sein. Zum einen hängt er davon ab, welche Funktionen der Betreiber nutzen möchte (ein Betreiber nutzt beispielsweise den Netzwerkmanager NMC nur für "Fault-Management" und "Performance-Management"; er kauft dementsprechend nur einen Teil der gesamtmöglichen Funktion der Software) zum anderen hängt der Funktionsumfang der OMC-NMC-Schnittstelle davon ab, welche Art von Netzwerkmanager NMC verwendet wird. Bestimmte Managementfunktionen werden z.B. vom OMC unterstützt, nicht jedoch vom NMC.

Ein Kunde kauft somit i.d.R. nur einen Teil des gesamten Funktionsumfanges der OMC-NMC-Schnittstelle. Folglich muß jeder Elementmanager OMC mit einer unterschiedlichen kundenspezifischen OMC-NMC-Schnittstelle und einer dazugehörigen Dokumentation geliefert werden. Dies bedeutet einen hohen Implementierungs- und Verwaltungsaufwand für die verschiedenen Produktversionen.

Es ist daher die Aufgabe der vorliegenden Erfindung, den Implementierungs- und Verwaltungsaufwand bei einer OMC-NMC-Schnittstelle zu verringern.

Gelöst wird diese Aufgabe durch die im Patentanspruch 1 angegebenen Merkmale. Weitere Ausführungsformen der Erfindung sind Gegenstand von Unteransprüchen.

Der wesentliche Gedanke der Erfindung besteht darin, eine einzige Implementierung der OMC-NMC-Schnittstelle, welche sämtliche Funktionalitäten umfaßt, einschließlich der gesamten Dokumentation an den Kunden auszuliefern. Um zu verhindern, dass der Betreiber auch nicht-gekaufte Funktionen der Schnittstelle im Netzwerkmanager implementiert und nutzt, wird vorgeschlagen, ein kundenspezifisches Referenzsignal vom Netzwerkmanager NMC an den Elementmanager OMC zu senden, anhand dessen die OMC-NMC-Schnittstelle derart dynamisch konfiguriert wird, dass nur bestimmte Funktionen vom Elementmanager unterstützt werden. In diesem Fall kann beispielsweise nur ein Teil des gesamten Funktionsumfanges, wie z.B. nur ein Teil des "Fault-Managements" genutzt werden.

In Abhängigkeit von der übermittelten Kundenreferenz werden vorzugsweise nur bestimmte NMC-Kommandos angenommen und im Elementmanager bzw. in den Netzwerkelementen ausgeführt oder es werden z.B. nur bestimmte Meldungen aus dem Telekommunikationsnetz an den Netzwerkmanager gesendet.

Das übertragende Referenzsignal bezeichnet also das Objekt- bzw. Informationsmodell, welches dem speziellen Kunden zusteht.

Die genannte kundenspezifische Referenz ist vorzugsweise ein Code, der z.B. auch verschlüsselt übertragen werden kann.

Gemäß einer bevorzugten Ausgestaltung der Erfindung umfaßt das Referenzsignal neben der Information über das Informationsmodell auch eine Kundenkennung (z.B. den Namen des Kunden oder eine andere, den Kunden eindeutig kennzeichnende Bezeichnung). Diese Kundenkennung kann beispielsweise an einer Bedienoberfläche des NMC oder OMC angezeigt, ggf. auch an den Hersteller der Schnittstelle übermittelt werden. Dadurch kann überprüft werden, ob der Betreiber den ihm zustehenden Funktionsumfang des Systems nutzt oder das Informationsmodell eines anderen Betreibers mißbraucht.

Das Referenzsignal wird vorzugsweise in der Phase des Verbindungsaufbaus zwischen Netzwerkmanager und Elementmanager übermittelt. Dabei kann z.B. ein Feld einer Dienstprimitive (kurze Nachricht) zum Verbindungsaufbau genutzt werden.

Der Informationsaustausch zwischen NMC und OMC erfolgt vorzugsweise mittels OSI-Protokoll (OSI: Open System Interconnection). Für den Verbindungsaufbau definiert das OSI-Protokoll auf der Anwendungsebene (Application Layer) ein Application Service Element (ASE), das sogenannte Association Control Service Element (ACSE). ACSE-Dienst und -Protokoll werden in den ITU-T-Recommendations X.217/X.227 beschrieben (ITU-T: International Telecommunications Union - Telecommunication standardisation sector). Die Implementierung des ACSE an der OMC-NMC-Schnittstelle erfolgt vorzugsweise gemäß diesen ITU-T-Standards, wobei einige Parameter erst zur Verbindungsaufbauzeit (association establishment time) zwischen den ACSE-Anwendern, d.h. zwischen OMC und NMC, ausgetauscht bzw. ausgehandelt werden können.

Das ACSE definiert mehrere Dienstprimitiven für den Verbindungsaufbau bzw. die -freigabe, darunter eine Dienstprimitive A_ASSOCIATE. Der Verbindungsaufbau wird vorzugsweise durch einen Austausch von A_ASSOCIATE Dienstprimitiven, die unter anderem einen Parameter "User Data" enthalten können, eingeleitet. Gemäß dem Standard ITU-T X.227 wird dieser Parameter als Nutzerinformationsfeld definiert, das auch die Codierung von anwendungsspezifischen Informationen ermöglicht.

Erfindungsgemäß kann dieses Feld "User Data" zur Übermittlung des kundenspezifischen Referenzsignals genutzt werden.

## Patentansprüche

1. Verfahren zum kundenspezifischen Einrichten eines Telekommunikations-Management-Netzwerks (1) mit einem Netzwerkmanager (NMC) und wenigstens einem Elementmanager (OMC₁-OMC_{N}), die über eine OMC-NMC-Schnittstelle (2) miteinander kommunizieren,
**dadurch gekennzeichnet,**
**dass** der Netzwerkmanager (NMC) ein kundenspezifisches Referenzsignal an den Elementmanager (OMC₁-OMC_{N}) sendet, anhand dessen die Schnittstelle (2) derart konfiguriert wird, dass nur bestimmte Funktionen im Telekommunikations-Management-Netzwerk (1) genutzt werden können.

2. Verfahren nach Anspruch 1,
**dadurch gekennzeichnet,**
**dass** nach Übermittlung des Referenzsignals an den Elementmanager (OMC₁-OMC_{N}) nur bestimmte NMC-Kommandos angenommen und im Elementmanager (OMC) bzw. in den Netzwerkelementen (NE) ausgeführt und/oder nur bestimmte Meldungen aus dem zugehörigen Telekommunikationsnetz an den Netzwerkmanager (NMC) gesendet werden können.

3. Verfahren nach Anspruch 1 oder 2,
**dadurch gekennzeichnet,**
**dass** das Referenzsignal ein Paßwort enthält, das das Informationsmodell bestimmt, welches einem speziellen Kunden zusteht.

4. Verfahren nach Anspruch 3,
**dadurch gekennzeichnet,**
**dass** das Referenzsignal eine zusätzliche Kundenkennung enthält.

5. Verfahren nach einem der vorhergehenden Ansprüche,
**dadurch gekennzeichnet,**
**dass** das Referenzsignal verschlüsselt übertragen wird.

6. Verfahren nach einem der vorhergehenden Ansprüche,
**dadurch gekennzeichnet,**
**dass** das Referenzsignal in der Phase des Verbindungsaufbaus vom Netzwerkmanager (NMC) an den Elementmanager (OMC) übertragen wird.

7. Verfahren nach einem der vorhergehenden Ansprüche,
**dadurch gekennzeichnet,**
**dass** ein Feld einer Dienstprimitive zum Verbindungsaufbau genutzt wird, um das Referenzsignal zu übertragen.

8. Verfahren nach einem der vorhergehenden Ansprüche,
**dadurch gekennzeichnet,**
**dass** zum Verbindungsaufbau zwischen dem Netzwerkmanager (NMC) und dem Elementmanager (OMC) das standardisierte ACSE-Service-Element verwendet wird.

9. Verfahren nach einem Ansprüche 6 bis 8,
**dadurch gekennzeichnet,**
**dass** zum Verbindungsaufbau eine Dienstprimitive A_ASSOCIATE verwendet wird.

10. Verfahren nach Anspruch 9,
**dadurch gekennzeichnet,**
**dass** ein Feld "User Data" der Dienstprimitive genutzt wird, um das kundenspezifische Referenzsignal zu übermitteln.

11. Verfahren nach Anspruch 4,
**dadurch gekennzeichnet,**
**dass** die Kundenkennung angezeigt wird.

12. Verfahren nach einem der vorhergehenden Ansprüche,
**dadurch gekennzeichnet,**
**dass** jeder Kunde eine eigene Informationsmodell-Referenz erhält.

## Claims

1. Method for setting up a customer-specific Telecommunications Management-Network (1) with a Network Management Centre (NMC) and at least one Operation and Maintenance Centre (OMC₁-OMC_{N}) which communicate with each other via an OMC-NMC interface (2),
**characterized in that**
the Network Management Centre (NMC) sends a customer-specific reference signal to the Operation and Maintenance Centres (OMC₁-OMC_{N}) on the basis of which the interface (2) is configured such that only specific functions can be used in the Telecommunications Management Network (1).

2. Method in accordance with claim 1,
**characterized in that**,
after the reference signal has been transferred to the Operation and Maintenance Centres (OMC₁-OMC_{N}), only specific NMC commands are accepted and executed in the Operation and Maintenance Centres (OMC) or in the Network Element (NE) and/or only specific messages can be sent from the associated telecommunications network to the Network Management Centre (NMC).

3. Method in accordance with claim 1 or 2,
**characterized in that**
the reference signal contains a password which specifies the information model to which a specific customer is entitled.

4. Method in accordance with claim 3,
**characterized in that**
the reference signal contains an additional customer code.

5. Method in accordance with one of the previous claims,
**characterized in that**
the reference signal is transmitted encrypted.

6. Method in accordance with one of the previous claims,
**characterized in that**
the reference signal is transmitted in the connection setup phase from the Network Management Centre (NMC) to the Operation and Maintenance Centre (OMC).

7. Method in accordance with one of the previous claims.
**characterized in that**
a field of a service primitive for connection setup is used to transmit the reference signal.

8. Method in accordance with one of the previous claims.
**characterized in that**
the standardized ACSE service element is used for connection setup between the Network Management Centre (NMC) and the Operation and Maintenance Centre (OMC).

9. Method in accordance with one of the claims 6 to 8,
**characterized in that**
a service primitive A_ASSOCIATE is used for connection setup.

10. Method in accordance with claim 9,
**characterized in that**
a field "User Data" of the service primitive is used to transmit the customer-specific reference signal.

11. Method in accordance with claim 4,
**characterized in that**
the customer code is displayed.

12. Method in accordance with one of the previous claims,
**characterized in that**
each customer is given their own information model reference.

## Revendications

1. Procédé pour la configuration spécifique client d'un réseau de gestion de télécommunications (1) comprenant un gestionnaire de réseau (NMC) et au moins un gestionnaire d'éléments (OMC₁-OMC_{N}) qui communiquent entre eux par l'intermédiaire d'une interface OMC-NMC (2)
**caractérisé**
**en ce que** le gestionnaire de réseau (NMC) émet au gestionnaire d'éléments (OMC₁-OMC_{N}) un signal de référence spécifique client, à l'aide duquel l'interface (2) est configurée de telle manière que seulement certaines fonctions peuvent être utilisées dans le réseau de gestion de télécommunications (1).

2. Procédé selon la revendication 1,
**caractérisé**
**en ce qu'**après la transmission du signal de référence au gestionnaire d'éléments (OMC₁-OMC_{N}) seulement certaines instructions NMC peuvent être acceptées et exécutées dans le gestionnaire d'éléments (OMC) resp. dans les éléments de réseau (NE) et/ou seulement certains messages peuvent être émis au gestionnaire de réseau (NMC) à partir du réseau de télécommunication correspondant.

3. Procédé selon la revendication 1 ou 2,
**caractérisé**
**en ce que** le signal de référence contient un mot de passe déterminant le modèle d'information qui revient à un client particulier.

4. Procédé selon la revendication 3,
**caractérisé**
**en ce que** le signal de référence contient une identification de client supplémentaire.

5. Procédé selon l'une quelconque des revendications précédentes,
**caractérisé**
**en ce que** le signal de référence est transmis en étant codé.

6. Procédé selon l'une quelconque des revendications précédentes,
**caractérisé**
**en ce que** le signal de référence est transmis par le gestionnaire de réseau (NMC) au gestionnaire d'éléments (OMC) pendant la phase d'établissement de la connexion.

7. Procédé selon l'une quelconque des revendications précédentes,
**caractérisé**
**en ce qu'**un champ d'une primitive de service est utilisé pour l'établissement de connexion afin de transmettre le signal de référence.

8. Procédé selon l'une quelconque des revendications précédentes,
**caractérisé**
**en ce que** l'élément de service normalisé ACSE est utilisé pour l'établissement de connexion entre le gestionnaire de réseau (NMC) et le gestionnaire d'éléments (OMC).

9. Procédé selon l'une des revendications 6 à 8,
**caractérisé**
**en ce qu'**une primitive de service A_ASSOCIATE est utilisée pour l'établissement de connexion.

10. Procédé selon la revendication 9,
**caractérisé**
**en ce qu'**un champ « User Data » de la primitive de service est utilisé afin de transmettre le signal de référence spécifique client.

11. Procédé selon la revendication 4,
**caractérisé**
**en ce que** l'identification de client est affichée.

12. Procédé selon l'une quelconque des revendications précédentes,
**caractérisé**
**en ce que** chaque client obtient une référence propre de modèle d'information.
